# EUROPEAN PATENT APPLICATION

(11) **EP 2 445 148 A1**
(43) Date of publication of application: **25.04.2012**
(21) Application number: 09845987.8
(22) Date of filing: 17.06.2009
(51) Int. Cl.: H04L 12/58

(54) **METHOD AND APPARATUS FOR CONTROLLING PRESENCE INFORMATION OF THE USER TERMINAL IN COMMUNICATION NETWORK**

(71) Applicant: Alcatel Lucent, 75007 Paris (FR)
(72) Inventor: WANG, Zhi, Qingdao Shandong 266101 (CN)
(74) Representative: Hervouet, Sylvie
(86) International application number: PCT/CN2009/072308
(87) International publication number: WO 2010/145073

(57) **Abstract**

In order to solve the problem in the prior art that presence information can not be correctly displayed according to the actual source of presence information in case of such as call forward, the present invention provides a method and device in a network server for controlling presence information of a first user equipment. The method comprises: receiving instruction information, wherein the instruction information is used for indicating to display presence information of the first user equipment as presence information of a second user equipment; obtaining presence information of the second user equipment; providing presence information of the second user equipment to an observer subscribing to presence information of the first user equipment, so that presence information of the first user equipment, to which the observer subscribes, is displayed as presence information of the second user equipment. Using the solution of the present invention, the relocation for presence information of a user equipment can be achieved, which enables the user to show his presence information to other users subscribing to his presence information more flexibly.

## Description

### FIELD OF THE INVENTION

The present invention relates to communication network, especially to a method and apparatus for processing presence service in an IMS (IP Multimedia Subsystem) in a communication network.

### BACKGROUND OF THE INVENTION

Currently, the popularization of the internet service has changed people's communication custom to a great extent. Besides the traditional voice communication, the instant messaging service is becoming more and more popular in a plurality of users due to its high efficiency, convenience, good privacy etc. In order to meet more and more demands of people for the instant messaging service, the mobile network and terminal technique also need to be improved and extended accordingly. As a result, Presence technique occurs.

Presence service is also called presence service, online state service, etc, and plays a very important role in instant communication. Depending on Presence technique, an instant messaging service user may set the user presence information as one of a plurality of states such as "in calling", "during a meeting", etc, and at the same time set in which state the user has which communication abilities and wants to use which communication mode, and the user may also subscribe to presence information of others so that the calling party knows whether the called party may be connected before calling. When the user is busy, he may set his presence information as offline or in busy, thereby preventing the interference caused by unnecessary calling. Therefore, presence information is convenient for both the calling party and the called party to select the most suitable communication mode in a certain occasion so as to improve the communication efficiency and communication quality.

For example, when the mobile phone of a user is shutdown due to lack of power, the user may forward all calls of his mobile phone to his fixed line. However, since presence information of the mobile phone of the user still shows the mobile phone is offline, that is, what is shown on the subscriber subscribing to the presence information of the mobile phone is that the state of the mobile phone is still offline, therefore, it is quite possible for the other subscriber wishing to contact the user not to call the mobile phone of the user due to the offline state of the mobile phone. Therefore, it is quite possible that the user still can not get the call from his subscriber such as a client since the others may not initiate a call request to an offline user equipment though the user activates the function of forwarding the mobile phone call to the fixed line.

### SUMMARY OF THE INVENTION

As there is aforesaid problem in the prior art, the present invention proposes a method and device for setting to show the information source.

According to the first aspect of the present invention, there is provided a method , in a network server, of controlling presence information of a first user equipment, wherein the method comprises the following steps of: receiving instruction information, wherein the instruction information is used for indicating to display presence information of the first user equipment as presence information of a second user equipment; obtaining presence information of the second user equipment; providing presence information of the second user equipment to an observer subscribing to presence information of the first user equipment, so that presence information of the first user equipment, to which the observer subscribes, is displayed as presence information of the second user equipment.

According to the second aspect of the present invention, there is provided a control device in a network server for controlling presence information of a first user equipment, wherein the device comprises: a receiving means, for receiving instruction information, wherein the instruction information is used for indicating to display presence information of the first user equipment as presence information of a second user equipment; an obtaining means, for obtaining presence information of the second user equipment; a providing means, for providing presence information of the second user equipment to an observer subscribing to presence information of the first user equipment, so that presence information of the first user equipment, to which the observer subscribes, is displayed as presence information of the second user equipment.

Using the solution of the present invention, the relocation for presence information of a user equipment can be achieved, which enables the user to show his presence information to other users subscribing to his presence information more flexibly.

### BRIEF DESCRIPTION OF THE DRAWINGS

By reading the detailed description of the non-limiting embodiments with reference to the following drawings, other features, objects and advantages of the present invention will become apparent.
Fig.1 is a schematic diagram of a network topology structure, according to a detailed embodiment of the present invention;
Fig.2 shows a flowchart of a method, according to a detailed embodiment of the present invention;
Fig.3 shows a logical representation of a presence information proxy server 1, according to a detailed embodiment of the present invention;
Fig.4 shows a flowchart of a system method, according to a detailed embodiment of the present invention;
Fig.5 shows a block diagram of a device for controlling presence information of a first user equipment 2a in the presence information proxy server 1, according to a detailed embodiment of the present invention;

In drawings, same or similar reference signs refer to the same or similar step feature or device/module.

### DETAILED DESCRIPTION OF EMBODIMENTS

In the followings, each of the non-limiting embodiments of the present invention is described in detail with reference to the drawings.

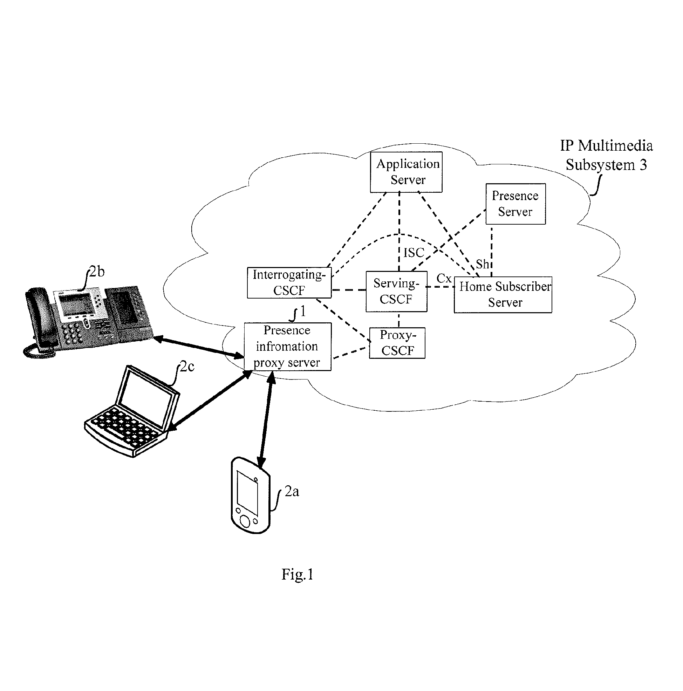

Fig.1 is a schematic diagram of a network topology structure, according to a detailed embodiment of the present invention. Fig.1 shows an application of the present invention in IMS. Certainly, those skilled in the art should understand that the present invention is not only limited to IMS network and suitable for any network which may support present information. Each of network function entities related to the present invention is shown in Fig.1. The following function entities: a P-CSCF (Proxy-Call Session Control Function), an I-CSCF (Interrogating- Call Session Control Function), a S-CSCF (Serving Call Session Control Function), an HSS (Home Subscriber Server), an application server, a PS (Presence Server) and a presence information proxy server 1 are shown in the IMS 3 denoted with cloud diagram in Fig.1. Wherein the presence information proxy server 1 is a newly added function entity for implementation of the present invention.

Wherein the P-CSCF is the first contact node when a UE (User Equipment) obtains an IMS service. The UE gets the address of the P-CSCF through a "local CSCF discovery procedure". The function of the P-CSCF is similar to a proxy server and the P-CSCF processes or forwards the received request and service.

The I-CSCF may act as a connection point of all users of network, or may also be used as a SAP (Service Access Point) of roaming users within the current network service zone.

The S-CSCF performs session controlling function and may maintain session state information according to the requirement of the network operator.

The HSS is a database of users and service information, which supports CS domain, PS domain and IMS subsystem.

Fig.1 further shows: the S-CSCF and the application server exchange messages through an ISC interface based on SIP (Session Initiation Protocol); the S-CSCF and the HSS communicate through a Cx interface based on Diameter Protocol; the HSS and the application server exchange information through a Sh interface based on Diameter Protocol.

For the detailed functions of P-CSCF, I-CSCF and S-CSCF, there are related descriptions in the existing protocols. Furthermore, those skilled in the art may refer to the related reference books, for example «3G core network technique» (ISBN 7-118-04056-8) published by National Defense Industry Press or «concept and service of IP multimedia in mobile field» (ISBN 7-111-15835-0/TN-404) published by China Machine Press, etc. Therefore, it is not repeated again here.

A plurality of UEs 2a, 2b and 2c are shown in Fig.1. Wherein 2a is a mobile phone and 2b is a fixed line phone such as a videophone, and 2c is a notebook computer. Certainly, the UEs may also include PDA (Personal Data Assistant), etc. each of UEs may be connected into the IMS network through the presence information proxy server 1.

The presence information proxy server 1 shown in Fig.1 is an instance of "network server", and it is only a functional entity. The presence information proxy server 1 may be separate network servers, or may be integrated with other servers, for example, the presence information proxy server 1 is integrated in the PS or other network servers or application servers.

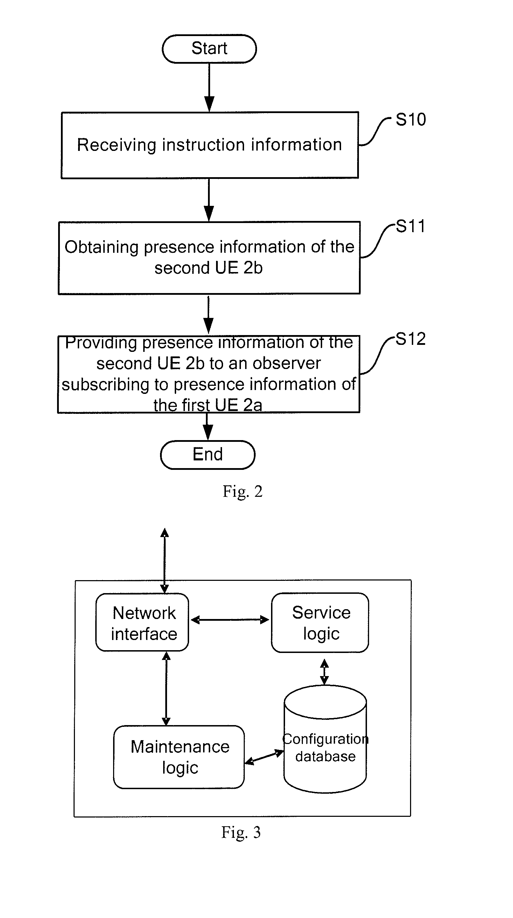

Fig.2 shows a flowchart of a method for controlling presence information of the first UE 2a in the presence information proxy server 1, according to a detailed embodiment of the present invention. In the followings, a detailed embodiment of the method of the present invention is described in detail referring to Fig.2 and in combination with Fig.1

In the embodiment, taking presence information of the UE 2b as the source of presence information of the UE 2a is taken as an example to illustrate.

As shown in Fig.2, in the step S10, the presence information proxy server 1 receives signaling information, the signaling information comprises provision of users for indicating to display presence information of the first UE 2a as presence information of a second UE 2b, therefore, necessarily, ID of UE of the first UE 2a and ID of UE of the second UE 2b are included in the signaling information. Those skilled in the art may understand that any user having permission may set the source of presence information of the first UE 2a as the second UE 2b and is not limited to the user of the first UE or the second UE. Furthermore, it is unnecessary that the first UE 2a and the second UE 2b belong to the same user. Preferably, the first UE 2a and the second UE 2b belong to the same user. The user may select the source of presence information of the first UE 2a which he wishes to set, by logging on the page via which the presence information proxy server 1 may be connected to, or by manual input or by a drop-down menu. In the embodiment, the user sets the source of presence information of the first UE 2a as the second UE 2b. Certainly, the user also may select other ways to perform the aforesaid presence information source setting, for example, the user may set the source of presence information of the first UE 2a as the second UE 2b by short-message interaction, or voice menu, or button input. Those skilled in the art may understand that the detailed obtaining ways, in which the presence information proxy server 1 obtains the instruction information for indicating the actual source of presence information of the first UE 2a, are not limited to the aforesaid examples which are all non-limiting.

In the step S11, the presence information proxy server 1 obtains presence information of the second UE 2b. For example, the second UE 2b periodically publishes to the PS each of information of the second UE 2b through publish request (publish request information, called publish message below for the convenience of description), wherein each of information of the second UE 2b comprises ID of the second UE 2b, TTL(Time To Live) of the publish message, and presence information of the second UE 2b, for example, the current state of the second UE 2b, whether it is online or offline, during a meeting , in calling, etc. In addition, presence information may also comprise personalized information representing the user of the second UE 2b, for example, the current mood which is denoted with a smiling face, etc. The publish message also comprises other information, which is defined in the existing protocol and has less correlation with the present invention, and thus it is not repeated again here.

After the presence information proxy server 1 obtains not only instruction information for indicating to set the source of presence information of the first UE 2a as the second UE 2b but also presence information of the second UE 2b, the method goes into the step S12, the presence information proxy server 1 provides presence information of the second UE 2b to observers subscribing to presence information of the first UE 2a, so that presence information of the first UE 2a, to which the observer subscribes, is displayed as presence information of the second UE 2b.

The observer is the subscriber subscribing to presence information of the first UE 2a. The observer registers to the user of the first UE 2a, and is authenticated by the user of the first UE 2a to be able to obtain presence information of the first UE 2a. That is, when the user updates presence information of the first UE 2a (including newly build, add, modify, delete), the observer may synchronously or asynchronously display the updated presence information of the first UE 2a. For example, in an example of instant messaging, for example, in a MSN instant messaging based on SIP protocol, state information comprises online, busy, be right back, depart, in calling, eating out, appear offline, etc, that is, presence information of the present invention. After the user modifies state information of the first UE 2a, the modified state information of the first UE 2a is displayed in the contact list of friends (that is, the observer in the present invention) of the user.

The presence information proxy server 1 needs not to know presence information of the first UE 2a, since in instruction information it is indicated that the first UE 2b is taken as the source of presence information of the first UE 2a, the presence information proxy server 1 only needs to know presence information of the second UE 2b. The presence information proxy server 1 provides to the observer of the first UE 2a presence information of the first UE 2b as presence information of the first UE 2a according to ID of the first UE 2a in the instruction information and presence information of the second UE 2b, and the observer of the first UE 2a will not know that the obtained presence information of the first UE 2a is actually from the second UE 2b, that is, modification of the source of presence information of the first UE 2a is transparent to the observer of the first UE 2a.

In a varied embodiment, before obtaining the publish message of the first UE 2b, the presence information proxy server 1 has already obtained the publish message of the first UE 2a. The publish message of the first UE 2a comprises ID of the first UE, TTL (Time To Live) of the publish message, and presence information of the first UE 2a. Furthermore, the publish message also comprises other information, which is defined in the related protocol, and thus it is not repeated again. Furthermore, the presence information proxy server 1 also receives instruction message for indicating to display presence information of the first UE 2a as presence information of the second UE 2b. Then, the presence information proxy server 1 does not send the publish message of the first UE 2a immediately but buffers the publish message of the first UE 2a. To be specific, in the step S12, the presence information proxy server 1 may process the publish message from the first UE 2a by any one of at least the following two ways:
I) the presence information proxy server 1 buffers the whole publish message of the first UE 2a in database, in which the presence information of the first UE 2a is included; after receiving the presence information of the second UE 2b, the presence information proxy server 1 only replaces the presence information in the publish message of the first UE 2a with the presence information of the second UE 2b and keeps other information in the first UE 2a unchanged, and provides to the PS the modified publish message of the first UE 2a. Then the PS provides to the observer of the first UE 2a the modified publish message of the first UE 2a according to the existing flow, for example calling flow. Since the presence information proxy server 1 only modifies presence information in the publish message and does not modify other information, the observer, receiving the modified presence information of the first UE 2a, will not know that the actual source of the presence information has changed.
II) the presence information proxy server 1 buffers partial information of publish message of the first UE 2a in database, that is, all other information except for the presence information of the first UE 2a, and the presence information of the first UE 2a is discarded; after receiving the presence information of the second UE 2b, the presence information proxy server 1 takes the presence information of the second UE 2b as the presence information of the first UE 2a and keeps other information of the first UE 2a unchanged, and provides to the PS the modified publish message of the first UE 2a. The PS provides to the observer of the first UE 2a the modified publish message of the first UE 2a according to the existing flow, for example calling flow. Since the presence information proxy server 1 only modifies presence information in the publish message and does not modify other information, the observer, receiving the modified presence information of the first UE 2a, will not know that the actual source of the presence information has changed.

In aforesaid embodiment, the step S10 is firstly described, that is, the presence information proxy server 1 obtains instruction information, and then obtains the presence information of the second UE 2b in the step S11. It should be understood that there is not obvious sequence relationship between the step S10 and S11. In a varied embodiment, the method may also perform the step S11 first, that is, obtaining the presence information of the second UE 2b, and then obtains instruction information, as long as both the steps S10 and S11 occur prior to the step S12.

In aforesaid embodiment, the user may set the source of the presence information of the first UE 2a as the second UE 2b. In a varied embodiment, the user may set the source of the presence information of the first UE 2a as the second UE 2b, moreover, the user or other users also may set the source of the presence information of the second UE 2b as the third UE, for example the UE 2c shown in Fig.1. The actual source of the presence information of the first UE 2a, obtained by the observer of the first UE 2a, is the UE 2c. In the varied embodiment, an obtaining means obtains the presence information of the third UE 2c and takes the presence information of the third UE 2c as the presence information of the second UE, and a providing means 102 provides the presence information of the third UE 2c to the observer of the presence information of the first UE 2a, that is, the third UE 2c is taken as the actual source of the presence information of the first UE 2a.

In a varied embodiment, the operator may bind call forward service with presence information forward service. That is, when the call forward, which the first UE 2a forwards to the second UE 2b, is activated, the application service, which transfers the source of the presence information of the first UE 2a to the second UE 2b, is activated simultaneously.

To be specific, in the network server, for example, in the presence information proxy server 1, the operator may set: when the presence information proxy server 1 obtains instruction information activating the first UE 2a to forward call to the second UE 2b, for example, the user sets to forward call to the second UE 2b through the option of call forward of menu in the first UE 2a (for example mobile phone), which may be forwarding all voice calling unconditionally, or forwarding data communication, or performing call forward in a specific scenario, for example, when the local line is busy, when the phone is not answered, when no network or the phone is power off, or when the phone can not be connected, etc. Certainly, the operator may set to activate corresponding presence information forwarding application only when unconditional forwarding, or, as long as call forward is performed, whether unconditional call forward or conditional call forward, corresponding presence information forwarding applications are activated. For example, when the presence information proxy server 1 receives the request for activating call forward to the second UE 2b from the first UE 2a, while modifying the attribute of call in database, the presence information proxy server 1 records and modifies the source of the presence information of the first UE 2a to the second UE 2b accordingly.

In the followings, the logical representation of the present invention is described in detail referring to Fig.3. Fig.3 shows a logical representation of a presence information proxy server 1, according to a detailed embodiment of the present invention.

As shown in Fig.3, the presence information proxy server 1 has a network interface. The presence information proxy server 1 has at least two network interfaces, in which one network interface is a state information interface for receiving presence information from users and providing it to a PS in the IMS network, and the interface supports protocols provided by TS24.141. The other network interface is the interface provided by the operator for receiving instruction information (that is, configuration information) from UEs.

Maintenance logic: is used for writing configuration information of users, that is, instruction information of users to the database.

Provision database: is used for saving configuration information of users, that is, instruction information of users.

Service logic: is used for providing to the PS the right presence information.

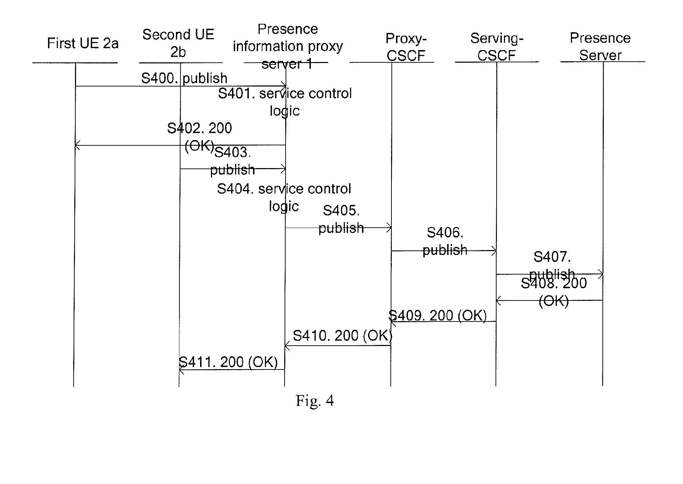

The embodiment shown in Fig.2 describes the embodiment of the present invention from the aspect of the presence information proxy server 1. In the followings, a flowchart of a system method, according to a detailed embodiment of the present invention is described referring to Fig.4. The first UE 2a, the second UE 2b, the presence information proxy server 1, the P-CSCF, the S-CSCF and the PS of Fig.4 have been shown in Fig.1 and described hereinbefore, therefore, it is not repeated herein again. Fig.4 shows the detailed flow of the process of interaction and answer for updating presence information among each of network entities, wherein in configuration information, the user sets the source of presence information of the first UE 1 as the second UE 2.

As shown in Fig.4, in the step S400, The first UE 2a sends publish request in which ID of the first UE 2a, presence information, TTL of the publish request, and security verify of publish message, etc may be included.

Then, in the step S401, according to configuration information of users, the presence information proxy server 1 performs service control logic for presence information from the first UE 2a, for example, discarding original presence information in the publish request and reserving other information in the publish request, for example, reserving ID of the first UE 2a, TTL of the publish request, security verify, etc.

Then, in the step S402, the presence information proxy server 1 sends to the first UE 2a a response message, that is, 200 (OK). According to the related specification of Presence, 200 (OK) is the response to the step S400, which indicates that the server has received the publish request message from the first UE 2a. Because discarding presence information of the first UE 2a is the process in the presence information proxy server 1 and does not involve the interaction between the presence information proxy server 1 and the first UE 2a, it is not necessary to change the interface between the presence information proxy server 1 and the first UE 2a, that is, the presence information proxy server 1 still sends the standard response 2000K to the first UE 2a.

Then, in the step S403, the second UE 2b sends a publish request message in which ID of the second UE 2b, presence information, TTL of the publish request, and security verify of publish message, etc may be included.

Then, in the step S404, the service control logic of the presence information proxy server 1 comprises updating the publish message for the first UE 2a based on the presence information of the second UE 2b, and only presence information in the updated publish message of the first UE 2a is from the second UE 2b. Unless other information in the publish request message needs to be changed in configuration information of the user, other information keeps unchanged, that is, other information is from the original publish message of the first UE 2a. Therefore, after receiving presence information of the first UE 2a, the observer of the first UE 2a will not know that presence information of the first UE 2a is actually from the second UE 2b.

Then, in steps S405, S406 and S407, the presence information proxy server 1 sends to the PS the updated publish request message of the first UE 2a and publish request message of the second UE 2b via forwarding of the P-CSCF and S-CSCF. Wherein publish request message of the second UE 2b is not changed, and publish message of the first UE 2a is updated by the presence information proxy server 1 according to presence information of the second UE 2b.

In the step S408, a proxy server sends 200 (OK) message to the second UE 2b, and the 200 (OK) is a response message and means that the proxy server has received the publish request from the second UE 2b. It is notable that the PS does not need to send the 200 (OK) response message to the first UE 2a now because the presence information proxy server 1 has sent 200 (OK) message to the first UE 2a in the step S402. Then, in steps S409-S411, the S-CSCF, the P-CSCF and the presence information proxy server 1 respectively forward the 200 (OK) message from the PS.

When PUBLISH is finished, the PS informs the observer of the updated presence information according to the current flow, now the actual source of presence information of the first UE 2a, obtained by the observer of the first UE 2a, is the second UE 2b.

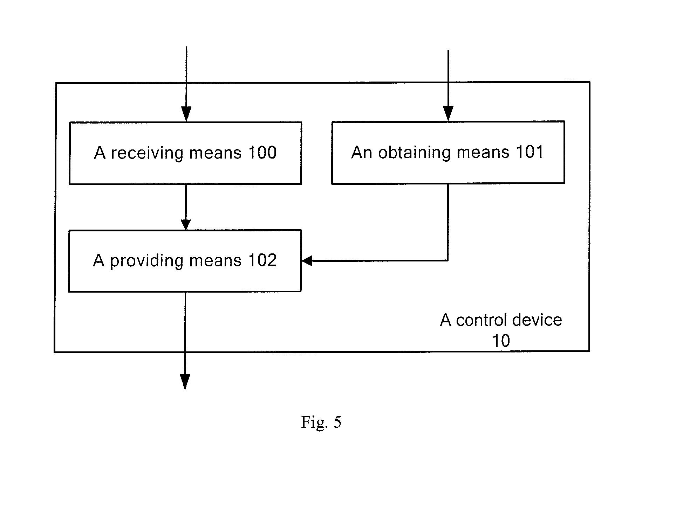

Fig.5 shows a block diagram of a device for controlling presence information of a first UE 2a in the presence information proxy server 1, according to a detailed embodiment of the present invention. In the followings, detailed embodiments of the device of the present invention are described in detail referring to Fig.5 and in combination with Fig.1 and Fig.2.

A control device 10 shown in Fig.5 is located in the presence information proxy server 1 shown in Fig.1. The control device 10 comprises a receiving means 100, an obtaining means 101 and a providing means 102.

In the embodiment, taking presence information of the UE 2b as the source of presence information of the UE 2a is taken as an example to illustrate.

As shown in Fig. 5, the receiving means receives signaling information, the signaling information comprises provision of users for indicating to display presence information of the first UE 2a as presence information of a second UE 2b, therefore, necessarily, ID of UE of the first UE 2a and ID of UE of the second UE 2b are included in the signaling information. Those skilled in the art may understand that any user having permission may set the source of presence information of the first UE 2a as the second UE 2b and is not limited to the user of the first UE or the second UE. Furthermore, it is unnecessary that the first UE 2a and the second UE 2b belong to the same user. Preferably, the first UE 2a and the second UE 2b belong to the same user. The user may select the source of presence information of the first UE 2a which he wishes to set, by logging the page via which the presence information proxy server 1 may be connected to, by manual input or by a drop-down menu. In the embodiment, the user sets the source of presence information of the first UE 2a as the second UE 2b. Certainly, the user also may select other ways to perform the aforesaid presence information source setting, for example, the user may set the source of presence information of the first UE 2a as the second UE 2b by short-message interaction, or voice menu, or button input. Those skilled in the art may understand that the detailed obtaining ways, in which the presence information proxy server 1 obtains the instruction information for indicating the actual source of presence information of the first UE 2a, are not limited to the aforesaid examples which are all non-limiting.

After then, the obtaining means obtains presence information of the second UE 2b. For example, the second UE 2b periodically publishes to the PS each of information of the second UE 2b through publish request (publish request information, called publish message below for the convenience of description), wherein each of information of the second UE 2b comprises ID of the second UE 2b, TTL(Time To Live) of the publish message, and presence information of the second UE 2b, for example, the current state of the second UE 2b, whether it is online or offline, during a meeting, in calling, etc. In addition, presence information may also comprise personalized information representing the user of the second UE 2b, for example, the current mood which is denoted with a smiling face, etc.. The publish message also comprises other information, which is defined in the existing protocol and has less correlation with the present invention, and thus it is not repeated again here.

After the presence information proxy server 1 obtains not only instruction information for indicating to set the source of presence information of the first UE 2a as the second UE 2b but also presence information of the second UE 2b, the providing means 102 provides presence information of the second UE 2b to observers subscribing to presence information of the first UE 2a, so that presence information of the first UE 2a, to which the observer subscribes, is displayed as presence information of the second UE 2b.

The observer is the subscriber subscribing to presence information of the first UE 2a, the observer registers to the user of the first UE 2a, and is authenticated by the user of the first UE 2a to be able to obtain presence information of the first UE 2a. That is, when the user updates presence information of the first UE 2a (including newly build, add, modify, delete), the observer may synchronously or asynchronously displays the updated presence information of the first UE 2a. For example, in an example of instant messaging, for example, in a MSN instant messaging based on SIP protocol, state information comprises online, busy, be right back, depart, in calling, eating out, appear offline, etc, that is, presence information of the present invention. After the user modifies state information of the first UE 2a, the modified state information of the first UE 2a is displayed in the contact list of friends (that is, the observer in the present invention) of the user.

The presence information proxy server 1 need not to know presence information of the first UE 2a, since in instruction information it is indicated that the first UE 2b is taken as the source of presence information of the first UE 2a, the presence information proxy server 1 only needs to know presence information of the second UE 2b. The providing means 102 provides to the observer of the first UE 2a presence information of the first UE 2b as presence information of the first UE 2a according to ID of the first UE 2a in the instruction information and presence information of the second UE 2b, and the observer of the first UE 2a will not know that the obtained presence information of the first UE 2a is actually from the second UE 2b, that is, modification of the source of presence information of the first UE 2a is transparent to the observer of the first UE 2a.

In a varied embodiment, before obtaining the publish message of the first UE 2b, the obtaining means 101 has already obtained the publish message of the first UE 2a. The publish message of the first UE 2a comprises ID of the first UE, TTL (Time To Live) of the publish message, and presence information of the first UE 2a. Furthermore, the publish message also comprises other information, which is defined in the related protocol, and thus it is not repeated again. Furthermore, the presence information proxy server 1 also receives instruction information for indicating to display presence information of the first UE 2a as presence information of the second UE 2b. Then, the providing means 102 does not send the publish message of the first UE 2a immediately, but the control device 10 also comprises a storing means (not shown in Fig.5), the storing means buffers the publish message of the first UE 2a. To be specific, an updating means (not shown in Fig.5) may process the publish message from the first UE 2a by any one of at least the following two ways:
I) the updating means buffers the whole publish message of the first UE 2a in database, in which the presence information of the first UE 2a is included herein; after the obtaining means receives the presence information of the second UE 2b, the updating means only replaces the presence information in the publish message of the first UE 2a with the presence information of the second UE 2b and keeps other information in the first UE 2a unchanged, and then the providing means 102 provides to the PS the modified publish message of the first UE 2a. Then the PS provides to the observer of the first UE 2a the modified publish message of the first UE 2a according to the existing flow, for example calling flow. Since the updating means only modifies presence information in the publish message and does not modify other information, the observer, receiving the modified presence information of the first UE 2a, will not know that the actual source of the presence information has changed.
II) the updating means buffers partial information of publish message of the first UE 2a in database, that is, all other information except for the presence information of the first UE 2a, and the presence information of the first UE 2a is discarded; after the obtaining means receives the presence information of the second UE 2b, the updating means takes the presence information of the second UE 2b as the presence information of the first UE 2a and keeps other information in the first UE 2a unchanged, and then the providing means 102 provides to the PS the modified publish message of the first UE 2a. The PS provides to the observer of the first UE 2a the modified publish message of the first UE 2a according to the existing flow, for example calling flow. Since the presence information proxy server 1 only modifies presence information in the publish message and does not modify other information, the observer, receiving the modified presence information of the first UE 2a, will not know that the actual source of the presence information has changed.

In aforesaid embodiment, there is not obvious sequence relationship between the operation that the receiving means 100 obtains instruction information and the operation that the obtaining means obtains the presence information of the second UE 2b. In a varied embodiment, firstly, the obtaining means obtains the presence information of the second UE 2b, and then the receiving means obtains instruction information, only after the receiving means 100 and the obtaining means respectively obtain corresponding information, the providing means can perform corresponding operation.

In aforesaid embodiment, the user may set the source of the presence information of the first UE 2a as the second UE 2b. In a varied embodiment, the user may set the source of the presence information of the first UE 2a as the second UE 2b, moreover, the user or other users also may set the source of the presence information of the second UE 2b as the third UE, for example the UE 2c shown in Fig.1. The actual source of the presence information of the first UE 2a, obtained by the observer of the first UE 2a, is the UE 2c. In the varied embodiment, an obtaining means obtains the presence information of the third UE 2c and takes the presence information of the third UE 2c as the presence information of the second UE, and a providing means 102 provides the presence information of the third UE 2c to the observer of the presence information of the first UE 2a, that is, the third UE 2c is taken as the actual source of the presence information of the first UE 2a.

In a varied embodiment, the operator may bind call forward service with presence information forward service. That is, when the call forward, which the first UE 2a forwards to the second UE 2b, is activated, the application service, which transfers the source of the presence information of the first UE 2a to the second UE 2b, is activated simultaneously.

To be specific, in the network server, for example, in the presence information proxy server 1, the operator may set: when the presence information proxy server 1 obtains instruction information activating the first UE 2a to forward call to the second UE 2b, for example, the user sets to forward call to the second UE 2b through the option of call forward of menu in the first UE 2a (for example mobile phone), which may be forwarding all voice calling unconditionally, or forwarding data communication, or performing call forward in a specific scenario, for example, when the local line is busy, when the phone is not answered, when no network or the phone is power off, or when the phone can not be connected, etc. Certainly, the operator may set to activate corresponding presence information forwarding application only when unconditional forwarding, or, as long as call forward is performed, whether unconditional call forward or also conditional call forward, corresponding presence information forwarding applications are activated. For example, when the presence information proxy server 1 receives the request for activating call forward to the second UE 2b from the first UE 2a, while modifying the attribute of call in database, the presence information proxy server 1 records and modifies the source of the presence information of the first UE 2a to the second UE 2b accordingly.

It can be understood, in the aforesaid embodiments of device parts, the receiving means is used for obtaining configuration information of users, and the obtaining means is used for obtaining presence information of users, in the present invention, two means are taken to be described. In actual application, the receiving means and the obtaining means may be reused.

Embodiments of the present invention is described hereinafter, but the present invention is not limited to the specific system, apparatus and detailed protocols, those skilled in the art may make all kinds of variation or modification within the scope of appended claims.

## Claims

1. A method, in a network server, of controlling presence information of a first user equipment, wherein the method comprises the following steps of:
a. receiving instruction information, wherein the instruction information is used for indicating to display presence information of the first user equipment as presence information of a second user equipment;
b. obtaining presence information of the second user equipment;
c. providing presence information of the second user equipment to an observer subscribing to presence information of the first user equipment, so that presence information of the first user equipment, to which the observer subscribes, is displayed as presence information of the second user equipment.

2. The method according to claim 1, wherein, after the step a and prior to the step c, the method further comprises:
i. obtaining a first publish message from the first user equipment, wherein the first publish message comprises presence information of the first user equipment;
ii. buffering the first publish message;
the step c further comprises:
c1. updating the first publish message according to presence information of the second user equipment;
c2. providing the updated first publish message to the observer so that presence information of the first user equipment, to which the observer subscribes, is displayed as presence information of the second user equipment.

3. The method according to claim 1 or 2, wherein the step b further comprises:
b1. receiving second publish information from the second user equipment, the second publish information comprising presence information of the second user equipment;
b2. extracting presence information of the second user equipment from the second publish information.

4. The method according to claim 1 or 2, wherein presence information of the second user equipment is from a third user equipment, the step b further comprises:
- obtaining presence information of the third user equipment;
- taking presence information of the third user equipment as presence information of the second user equipment.

5. The method according to any one of claims 1 to 4, wherein the network equipment binds presence information of user equipments with a call forward service, the step a further comprises:
- obtaining instruction information activating the first user equipment to forward a call to the second user equipment.

6. The method according to any one of claims 1 to 4, wherein the step a further comprises: obtaining instruction information inputted through a voice menu, a button or a website style by the user.

7. The method according to any one of claims 1 to 6, wherein the network equipment comprises a network server based on internet protocol multimedia subsystem.

8. The method according to any one of claims 1 to 7, wherein the presence information comprises at least one of the followings: status of the user equipment, communication information and individual information of the user.

9. A control device in a network server for controlling presence information of a first user equipment, wherein the device comprises:
a. a receiving means, for receiving instruction information, wherein the instruction information is used for indicating to display presence information of the first user equipment as presence information of a second user equipment;
b. an obtaining means, for obtaining presence information of the second user equipment;
c. a providing means, for providing presence information of the second user equipment to an observer subscribing to presence information of the first user equipment, so that presence information of the first user equipment, to which the observer subscribes, is displayed as presence information of the second user equipment.

10. The control device according to claim 9, wherein the obtaining means is further used for obtaining a first publish message from the first user equipment, wherein the first publish message comprises presence information of the first user equipment;
the control device further comprises:
a storing means, for buffering the first publish message;
the providing means further comprises:
an updating means, for updating the first publish message according to presence information of the second user equipment;
the providing means is further used for providing the updated first publish message to the observer so that presence information of the first user equipment, to which the observer subscribes, is displayed as presence information of the second user equipment.

11. The control device according to claim 9 or 10, wherein the obtaining means is further used for receiving second publish information from the second user equipment, the second publish information comprising presence information of the second user equipment;
The obtaining means further comprises an extracting means for extracting presence information of the second user equipment from the second publish message.

12. The control device according to claim 9 or 10, wherein presence information of the second user equipment is from a third user equipment, the obtaining means is further used for obtaining presence information of the third user equipment and taking presence information of the third user equipment as presence information of the second user equipment.

13. The control device according to any one of claims 9 to 12, wherein the network equipment binds presence information of user equipments with a call forward service, the receiving means is further used for:
obtaining instruction information activating the first user equipment to forward a call to the second user equipment.

14. The control device according to any one of claims 9 to 12, wherein the receiving means is further used for:
obtaining instruction information inputted through a voice menu, a button or a website style by the user.

15. The control device according to any one of claims 9 to 14, wherein the network equipment comprises a network server based on internet protocol multimedia subsystem.
